# EUROPEAN PATENT SPECIFICATION

(11) **EP 3 811 222 B1**
(45) Date of publication and mention of the grant of the patent: **06.04.2022**
(21) Application number: 19752249.3
(22) Date of filing: 11.06.2019
(51) Int. Cl.: G06F 11/36

(54) **REDUCING A TEST SUITE FOR RE-TESTING CONFIGURED INSTANCES IN A PRODUCTION ENVIRONMENT**
REDUZIERUNG EINER TESTSUITE ZUM ERNEUTEN TESTEN KONFIGURIERTER INSTANZEN IN EINER PRODUKTIONSUMGEBUNG
RÉDUCTION D'UNE SUITE D'ESSAIS POUR LE RÉ-ESSAI D'INSTANCES CONFIGURÉES DANS UN ENVIRONNEMENT DE PRODUCTION

(30) Priority: 19.06.2018 US 201862686925 P
(43) Date of publication of application: 28.04.2021
(73) Proprietor: Telefonaktiebolaget LM Ericsson (publ), 164 83 Stockholm (SE)
(72) Inventor: TOEROE, Maria, Montreal Québec H3G 1A9 (CA); JEBBAR, Oussama, Montreal Québec H3T 1E3 (CA); SAIED, Mohamed Aymen, Saint-Léonard Québec H1R 3T5 (CA); KHENDEK, Ferhat, Montreal Québec H4B 2G6 (CA)
(74) Representative: Ericsson
(86) International application number: PCT/IB2019/054874
(87) International publication number: WO 2019/243953

(56) References cited:
- US-A1- 2016 019 135
- US-B2- 9 405 663

## Description

### TECHNICAL FIELD

Embodiments of the invention relate to software testing; more specifically, to the validation of a configured system in a production environment.

### BACKGROUND

Cloud providers offer a wide variety of services to their tenants. Cloud providers use the same infrastructure to serve multiple tenants, and provide software that can be used under different settings and configurations to accommodate different tenants' requirements (e.g. multitenant applications). The shared infrastructure between resources allocated to different tenants may jeopardize the validity of assumptions made regarding the tests performed in the development environment (e.g. resource consumption). This raises several questions regarding the validity in the production environment of the results of tests performed in the development environment. Moreover, the settings, reflected in configurations, used in the production environment are often different from the ones used in the development environment.

In the production environment, a system runs to provide the intended services to customers. This is as opposed to the development environment in which the system runs to verify the correctness of its features that have been implemented.

Changing software settings and redeploying the software in a new environment are scenarios that frequently arise in a cloud environment. To ensure that a reconfiguration has achieved intended goals and has not caused any undesired effects, the system needs to undergo regression tests. Regression test selection techniques have been proposed to avoid the problem of re-running the whole test suite after each reconfiguration, especially with frequently changing configurations and reconfigurations made at customer sites. For fast-growing markets, systems may undergo hundreds of configuration changes every day.

US9,405,663B2 discloses a method of generating an optimized test suite for using in a software testing system. The method comprises enabling a user to enter a filtering criteria by the optimization engine, on the optimization engine receiving information related to the application under test; filtering the requirements by the optimization engine, based on the at least one target environment; selecting the requirements for test execution by the optimization engine based on the risk index; identifying final requirement suite for test execution by the optimization engine; filtering test data by the optimization engine based on current test environment; optimizing the filtered test data by the optimization engine by applying orthogonal array methodology; and triggering generation of test cases and test scripts by the optimization engine for at least one model, wherein the at least one model is selected based on the final optimized requirements suite and the filtered and optimized test data of each of the at least one model..

US2016/0019135A1 discloses a test-suite reduction method which is based on the computation of network maximum flows.

### SUMMARY

In one embodiment, there is provided a method for validating a configured instance of a system in a production environment using test cases selected from a test suite which has validated a first configured instance of the system in a development environment. The method comprises: forming a reduced set of requirements in response to a change in environments by removing one or more requirements from a set of requirements against which the first configured instance is validated. The removed one or more requirements include at least one or more environment agnostic requirements which are independent of the environments. The removing is based on at least a classification of configuration parameters of the system with respect to dependency of the environments and is further based on a first relation between the set of requirements and the configuration parameters. The method further comprises: forming a reduced test suite by selecting, from the test suite, the test cases that test the system against each requirement in the reduced set of requirements; and applying the reduced test suite to a second configured instance of the system to thereby validate that the system operates in compliance with the set of requirements in the production environment.

In another embodiment, there is provided a network node comprising processing circuitry and memory. The memory contains instructions executable by the processing circuitry to validate a configured instance of a system in a production environment using test cases selected from a test suite, which has validated a first configuration of a system in a development environment. The network node is operative to form a reduced set of requirements in response to a change in environments by removing one or more requirements from a set of requirements against which the first configured instance is validated, wherein the removed one or more requirements include at least one or more environment agnostic requirements which are independent of the environments, and wherein the removing is based on at least a classification of configuration parameters of the system with respect to dependency of the environments and is further based on a first relation between the set of requirements and the configuration parameters; to form a reduced test suite by selecting, from the test suite, the test cases that test the system against each requirement in the reduced set of requirements; and to apply (430) the reduced test suite to a second configured instance of the system to thereby validate that the system operates in compliance with the set of requirements in the production environment.

Other aspects and features will become apparent to those ordinarily skilled in the art upon review of the following description of specific embodiments in conjunction with the accompanying figures.

### BRIEF DESCRIPTION OF THE DRAWINGS

Embodiments will now be described, by way of example only, with reference to the attached figures.
Figure 1 illustrates an overall approach to test case selection for a production environment according to one embodiment.
Figure 2 is a diagram illustrating inputs to a test case selection method according to one embodiment.
Figure 3 illustrates further details of the test selection method of Figure 2 according to one embodiment.
Figure 4 is a flow diagram illustrating a method for test case selection according to an embodiment.
Figure 5 is a block diagram of a network node according to one embodiment.
Figure 6 is a block diagram of a network node according to another embodiment.
Figure 7 is an architectural overview of a cloud computing environment according to one embodiment.

### DETAILED DESCRIPTION

Reference may be made below to specific elements, numbered in accordance with the attached figures. The discussion below should be taken to be exemplary in nature, and should not be considered as limited by the implementation details described below, which as one skilled in the art will appreciate, can be modified by replacing elements with equivalent functional elements.

Configurations play an important role in the behavior and operation of configurable systems. Prior to deployment in a production environment, a configured system may be tested in a development environment. Due to the differences between the two environments, the system is reconfigured to adapt to the production environment and is re-tested in the production environment.

A test case selection method is disclosed herein. The method improves efficiency and reduces costs of testing a system configuration in a new environment (e.g. the production environment). Since the system has already been tested in the development environment, it is not necessary to re-apply all the test cases that have been used in the development environment. The method and the network nodes performing the method disclosed herein validate a system configuration using a reduced test suite, when the system is reconfigured to operate in a second environment (e.g. the production environment) different from a first environment (e.g. the development environment).

In one embodiment, the reduced test suite is formed by removing a number of test cases from a test suite which has been used to validate a first configuration of the system in the development environment against a set of requirements. The reduced test suite validates a second configuration of the system for operating in the production environment in compliance with the set of requirements. The test cases are removed based on a classification of configuration parameters, the relation between the configuration parameters and the requirements, and the relation between the requirements and the test cases. These relations help to determine which requirements need to be re-tested in the production environment and, therefore, the appropriate test cases can be retained for the re-tests.

The definitions of some of the terminologies used throughout the disclosure are provided below.

Configurable system: a configurable system is a system that cannot be used without a configuration. This configuration may be used to compile the code of the system (e.g. a Linux^{®} kernel configuration), launch an instance of the system, or parametrize the services that the system provides at runtime (e.g. a firewall configuration).

Configuration: a configuration is a set of (key, value) pairs, each of which represents a system function parameter identified by the key and its associated value in the given configuration. The parameter values do not change during system normal operation, i.e. when no bug is detected and no new feature is requested. These parameters are referred to as configuration parameters (cp).

Configured instance: a configured instance is a system resulting from configuring a configurable system for a given purpose and the resulting system is ready to use for the purpose. A configured instance is usually used to satisfy a refined subset of the requirements (reflecting the purpose) of the configurable system. A subset of the configuration parameters is set to satisfy these refined requirements.

Test case (tc): a set of conditions, interactions with the system under test (configured instance) and expected result derived from (and related to) one or several requirements.

Test suite (TS): a set of test cases to validate the system under test (configured instance) against the requirements. This disclosure focuses on acceptance testing of configured instances.

Coverage matrix: a relation between the test cases in a test suite and the requirements. A test case can map into many requirements as well as a requirement can be covered in many test cases. A coverage matrix may be created by an acceptance test designer.

Impact matrix: a matrix that captures the relation between the requirements and the configuration parameters. An impact matrix may be set by a configuration designer.

Some assumptions made in this disclosure are provided below. An error can be caused either by fault(s) in the code of the configurable system or fault(s) in the configuration. It is assumed that the system has been tested properly in the development environment and passed the acceptance test suite. Thus, it is assumed that the code of the configurable system is validated with respect to the test suite, and the configuration is the suspicious artifact in case of errors in the production environment.

Changes to a configuration lead to a new configured instance of the system. Therefore, the process of testing is reinitiated for the new configured instance. It is assumed that the configuration remains unchanged during testing.

Table 1 illustrates four scenarios of requirement refinements for a configurable system in an e-commerce application. Each row of Table 1 corresponds to one scenario. For each scenario, the last column of Table 1 provides the system's configuration settings that satisfy the requirements. In the first scenario, the configuration controls the presence or absence of features of the configurable system in the configured instance. The second scenario is a specialization at a functional level, and the third scenario is a specialization at a non-functional level. The last scenario covers refinement of accessibility aspects (e.g. access to the services exposed by the configured instance, or the service that the configured instance may need to provide its services properly).

**Table 1. Refinements of Requirements for a Configurable System**

| | Requirement on the configurable system | Requirement on a configured instance | Manifestation in the configuration |
|---|---|---|---|
| 1. Activation or deactivation | Payment per credit card is an optional feature in the configurable system. | An e-commerce application that allows payment per credit card. | A Boolean configuration parameter set to "true" or "1" (e.g. cc_payment=true). |
| 2. Refinement of a function | The number of items per cart should not exceed a pre-set number. | An e-commerce application that allows for up to 10 items per cart. | An integer configuration parameter set to 10 (e.g. max_item_per_cart=10). |
| 3. Refinement of an interaction | The duration for which the system waits for confirmation of a monetary transaction should not exceed a pre-set number. | An e-commerce application for which the processing of the payment should not exceed 1 minute. | An integer configuration parameter set to a duration in a time unit (e.g. if time unit is seconds, we can have a configuration parameter set as follows: transaction_timeout=60^{∗}). |
| 4. Refinement of accessibility | The credit card payment if activated should be accessible using TCP through a pre-set port. | An e-commerce application that allows payment per credit card. | An integer configuration parameter holding the port number (e.g. cc_service_port= 1025) |

A test selection method is described herein for selecting a reduced test suite to be executed in a production environment for validating a system with a second configuration. The reduced test suite is selected from a test suite that has been executed in a development environment to validate the system with a first configuration. This selection is performed by identifying and eliminating those test cases that do not need to be repeated in a new environment (e.g. the production environment). The selection is based on a classification of configuration parameters, a mapping between the requirements and the configuration parameters, and a mapping between the test cases and the requirements.

The classification of configuration parameters is described below. Configuration parameters may be classified into two categories: environment agnostic configuration parameters and environment dependent configuration parameters. This classification is an input to the test case selection method. In some embodiments, the number of configuration parameters may be in the hundreds.

An environment agnostic configuration parameter is independent of the environment of the configured instance. To satisfy a requirement, the value of an environment agnostic parameter can be set independently from the environment in which the configured instance is deployed. Typically, a configuration parameter has the same value (or a range of values) for all configured instances that satisfy a requirement related to this configuration parameter (e.g. the first two scenarios in Table 1). The values of the environment agnostic configuration parameters in the development environment are not changed for the production environment.

An environment dependent configuration parameter is dependent on the environment of the configured instance. In other words, to satisfy a requirement, the value of an environment dependent configuration parameter depends on the configured instance's environment (e.g. the last two scenarios in Table 1).

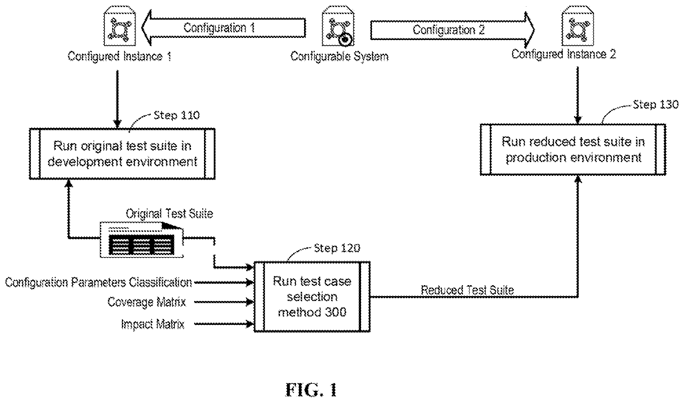

Figure 1 illustrates an overall approach to test case selection according to one embodiment. As illustrated at step 110 of Figure 1, a configured instance (Configured Instance1) of a configurable system is tested using a test suite ("original test suite") in a development environment. The system is then deployed in a production environment. The configuration (Configuration2) of the system in the production environment is different from the configuration (Configuration 1) of the system in the development environment. However, environment agnostic configuration parameters in both Configuration1 and Configuration2 stay the same. Before testing the system in the production environment, a test case selection method 300 is performed at step 120 to produce a reduced test suite. At step 130, a configured instance (Configured Instance2) of the system is tested using the reduced test suite.

It is noted that both configured instances (e.g. Configured Instance1 and Configured Instance2) satisfy the same requirements. The differences between both Configuration1 and Configuration2 result from the environment in which the system operates. For example, in the last scenario of Table 1 (i.e. the last row), the port through which credit card payments are accessible may depend on the available ports in the given environment. Similarly, in the third scenario of Table 1 (i.e. the third row), the payment processing time may depend on the location and the connection type (e.g. the connection speed) used in the given environment.

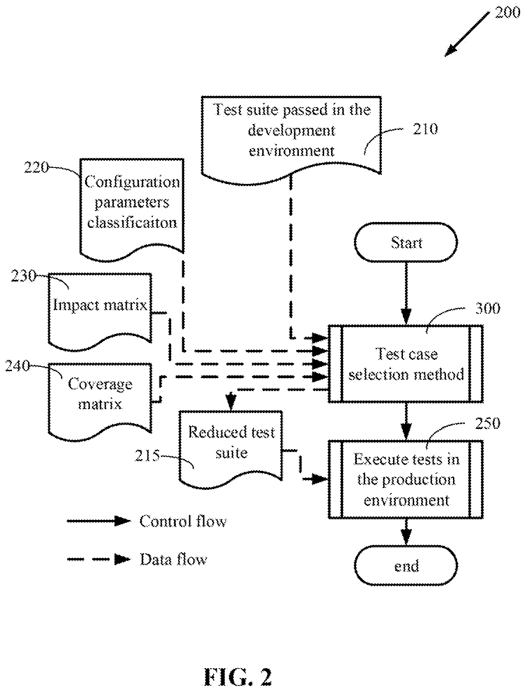

Figure 2 is a diagram illustrating the control and data flows of the test case selection method 300 of Figure 1 according to one embodiment. The control flows are indicated by solid lines and the data flows are indicated by dashed lines. The test case selection method 300 receives four inputs including: a test suite 210 (i.e. the original test suite in Figure 1); a classification of the configuration parameters 220, an impact matrix 230, and a coverage matrix 240. Prior to the execution of the test case selection method, the test suite 210 has already been applied to a system in the development environment and the system has passed the tests in the test suite 210. Based on these inputs, the test case selection method 300 outputs a reduced test suite 215 for testing the system in the production environment.

The impact matrix 230 captures the relation of the requirements and the configuration parameters. In one embodiment, the impact matrix 230 has each requirement in one row (or column) and each configuration parameter in one column (or row). Each cell in the impact matrix 230 indicates whether a corresponding requirement maps to a corresponding configuration parameter; i.e. whether the corresponding requirement is realized through at least this corresponding configuration parameter. The coverage matrix 240 captures the relation of the test cases and the requirements. In one embodiment, the coverage matrix 240 has each test case in one row (or column) and each requirement in one column (or row). Each cell in the coverage matrix indicates whether a corresponding test case maps to a corresponding requirement; i.e. whether the corresponding test case tests a system against at least this corresponding requirement. It is understood that the mapping or relation may be recorded in a data structure different from a matrix in an alternative embodiment.

From the classification of the configuration parameters 220 and the impact matrix 230, three categories of requirements can be defined below. The first category is environment agnostic requirements, which map to environment agnostic configuration parameters only. The second category is environment dependent requirements, which map to environment dependent configuration parameters only; e.g. the requirements related to system interfaces for interacting with the environment. The third category is composite requirements, which map to both environment agnostic and environment dependent configuration parameters.

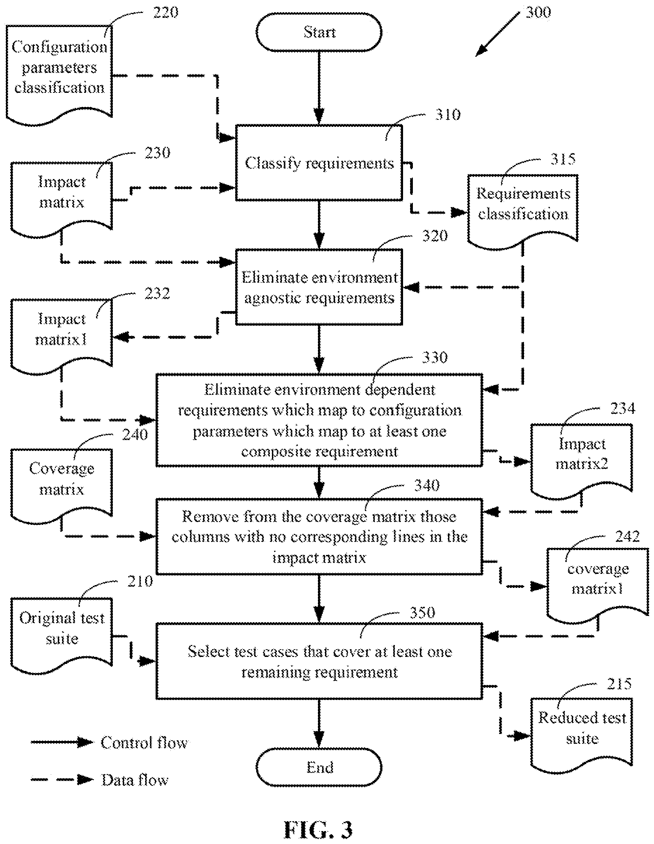

Figure 3 is a diagram illustrating further details of the test case selection method 300 according to one embodiment. The method 300 starts with step 310 when a requirements classification 315 is generated based on the configuration parameters classification 220 and the impact matrix 230. The requirements are classified into the three aforementioned categories; i.e. environment agnostic requirements, environment dependent requirements and composite requirements. At step 320, the impact matrix 230 is reduced by eliminating from it all the environment agnostic requirements, as there is no need to re-test the environment agnostic requirements in a new environment. The resulting impact matrix is an impact matrix1 232, which is further reduced at step 330 into an impact matrix2 234 using the information from the requirements classification 315. All the composite requirements remain in the impact matrix2 234. At step 330, the impact matrix1 232 is reduced by removing each environment dependent requirement which satisfies the following criterion: the environment dependent requirement maps to one or more environment dependent configuration parameters and the one or more environment dependent configuration parameters further map to at least one composite requirement. For an environment dependent requirement to be eliminated at this step, its environment dependent configuration parameter needs to map to a composite requirement. If there are multiple environment dependent configuration parameters of the environment dependent requirement, it is not necessary that these environment dependent configuration parameters map to the same composite requirement. The environment dependent requirement is eliminated if all of its environment dependent parameters are mapped into one or more composite requirements. Such an environment dependent requirement is for the interactions with the environment and has been covered in test cases related to composite requirements.

The requirements that remain in the impact matrix2 234 are referred to as the remaining requirements, which form a reduced set of requirements. The reduced set of requirements is used in the next steps to identify the reduced test suite 215. It is assumed in the following description that the coverage matrix 240 is arranged to have all the requirements along the column dimension and all the test cases in the test suite along the row dimension. It is understood that the requirements may be arranged along the row dimension and the test cases may be arranged along the column dimension in an alternative embodiment.

At step 340, all the columns of the coverage matrix 240 that correspond to the requirements dropped at steps 320 and 330 are removed from the coverage matrix 240 to form a reduced coverage matrix (i.e. coverage matrix1 242). That is, only the reduced set of requirements remains in the coverage matrix1 242. At step 350, the test cases covering at least one remaining requirement in the coverage matrix1 242 are selected. However, if the same requirement or requirements are covered by the same two or more test cases, only one of these test cases is selected. The method 300 ensures that at least one test case is selected for each environment dependent configuration parameter. The selected test cases form the reduced test suite 215.

An example is presented below to illustrate the test case selection method 300 with a test suite TS = {tc₁, tc₂, tc₃, tc₄, tc₅, tc₆}. The coverage matrix and the impact matrix are given in Table 2 and Table 3, respectively. Each cell marked with x indicates that a relation (i.e. mapping) exists between its corresponding column and row.

**Table 2. Example of a Coverage Matrix**

| | Req₁ | Req₂ | Req₃ | Req₄ | Req₅ |
|---|---|---|---|---|---|
| tc₁ | x | | | | |
| tc₂ | | x | | | |
| tc₃ | | | x | | |
| tc₄ | | | | x | |
| tc₅ | | | | | x |
| tc₆ | x | | x | | |

**Table 3. Example of an Impact Matrix**

| | cp₁ | cp₂ | cp₃ | cp₄ |
|---|---|---|---|---|
| Req₁ | | x | | x |
| Req2 | x | | | |
| Req₃ | | | x | |
| Req4 | | x | x | x |
| Req₅ | x | x | | |

In this example, it is assumed that cp₁ and cp₃ are environment agnostic, and cp₂ and cp₄ are environment dependent. According to the impact matrix in Table 3, the requirements are categorized as follows. Req₁ is environment dependent, Req₂ and Req₃ are environment agnostic, and Req₄ and Req₅ are composite requirements. Therefore, Req₂ and Req₃ can be removed from the impact matrix, and Req₄ and Req₅ are selected. Req₁, an environment dependent requirement, maps to two configuration parameters that Req₄ also maps to. Req₄ is a composite requirement already selected. Therefore, Req₁ is dropped. As a result, the reduced impact matrix consists of Req₄ and Req₅.

After the columns corresponding to Reqi, Req₂ and Req₃ are removed from the coverage matrix, only Req₄ and Req₅ are left in the coverage matrix. The test cases that cover Req₄ and Req₅ are tc₄ and tc₅, which form the reduced test suite for the production environment.

This disclosure provides a method for validating a system configuration in the production environment using test cases selected from a test suite which has been used to test a system in the development environment. The test case selection method reduces the test suite by utilizing the configuration parameters classified with respect to dependency on environments. Thus, when testing a configurable system in the production environment, a tester can re-use the results of the tests already performed in the development environment. Thus, testing a configurable system in the production environment becomes more efficient and less costly.

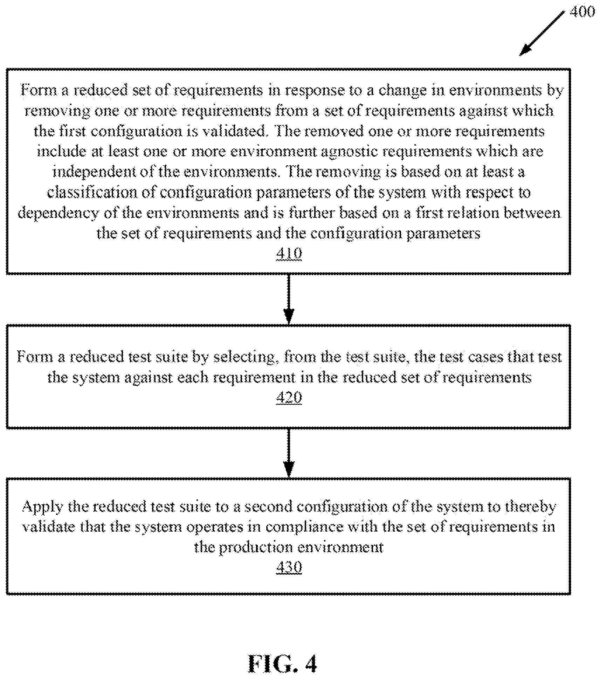

Figure 4 is a flow diagram illustrating a method 400 for validating a system configuration in a production environment using test cases selected from a test suite, which has validated a first configuration of a system in a development environment. The method 400 begins at step 410 with forming a reduced set of requirements in response to a change in environments. The reduced set of requirements may be formed by removing one or more requirements from a set of requirements against which the first configuration is validated. The removed requirements include at least one or more environment agnostic requirements which are independent of the environments. The removing is based on at least a classification of configuration parameters of the system with respect to dependency on the environments and is further based on a first relation between the set of requirements and the configuration parameters.

At step 420, a reduced test suite is formed by selecting, from the test suite, the test cases that test the system against each requirement in the reduced set of requirements. At step 430, the reduced test suite is applied to a second configuration of the system to thereby validate that the system operates in compliance with the set of requirements in the production environment.

In one embodiment, the inputs to the method 400 include an impact matrix, which captures the first relation; i.e. the relation between the set of requirements and the configuration parameters. The impact matrix may have the set of requirements along a first dimension and the configuration parameters along a second dimension.

In one embodiment, the configuration parameters are classified into environment dependent configuration parameters and environment agnostic configuration parameters. The environment agnostic configuration parameters are independent of the environment in which the system is deployed. The first configuration and the second configuration of the system have the same values for the environment agnostic configuration parameters. Based on the classified configuration parameters, the requirements in the set of requirements are classified into environment agnostic requirements, environment dependent requirements and composite requirements. Each composite requirement maps to at least one environment agnostic configuration parameter and at least one environment dependent configuration parameter. All of the composite requirements are retained in the reduced set of requirements.

In one embodiment, in addition to the one or more environment agnostic requirements, the requirements removed from the set of requirements further include at least an environment dependent requirement, which maps to a set of environment dependent configuration parameters and the set of environment dependent configuration parameters map to at least a composite requirement. In one embodiment, the environment dependent requirement is removed when a first configuration parameter and a second configuration parameter in the set of environment dependent configuration parameters map to different composite requirements.

In one embodiment, the inputs to the method 400 further include a coverage matrix, which relates test cases in the test suite to the set of requirements. The coverage matrix may have the test cases along a first dimension and the set of requirements along a second dimension. The reduced test suite is formed by selecting the test cases that cover the reduced set of requirements using the information in the coverage matrix.

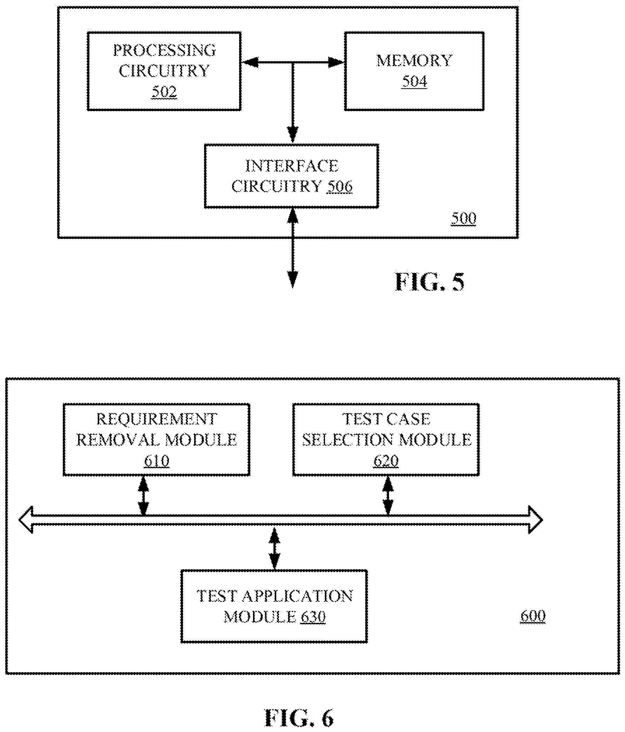

Figure 5 is a block diagram illustrating a network node 500 according to an embodiment. In one embodiment, the network node 500 may be a server in an operator network or in a data center. The network node 500 includes circuitry which further includes processing circuitry 502, a memory 504 or instruction repository and interface circuitry 506. The interface circuitry 506 can include at least one input port and at least one output port. The memory 504 contains instructions executable by the processing circuitry 502 whereby the network node 500 is operable to perform the various embodiments described herein, including the method 400 described with reference to Figure 4.

Figure 6 is a block diagram of an example network node 600 for validating a system configuration in a production environment according to one embodiment. The system configuration in the production environment is validated using test cases selected from a test suite which has validated a first configuration of the system in a development environment. In one embodiment, the network node 600 may be a server in an operator network or in a data center. The network node 600 includes a requirement removal module 610 operative to form a reduced set of requirements in response to a change in environments; a test case selection module 620 operative to form a reduced test suite; and a test application module 630 operative to apply the reduced test suite to a second configuration of the system to thereby validate that the system operates in compliance with the set of requirements in the production environment. More specifically, referring to the method 400 of Figure 4, the requirement removal module 610 is operative to perform step 410, the test case selection module 620 is operative to perform step 420, and the test application module 630 is operative to perform step 430 of the method 400. The network node 600 can be configured to perform the various embodiments as have been described herein.

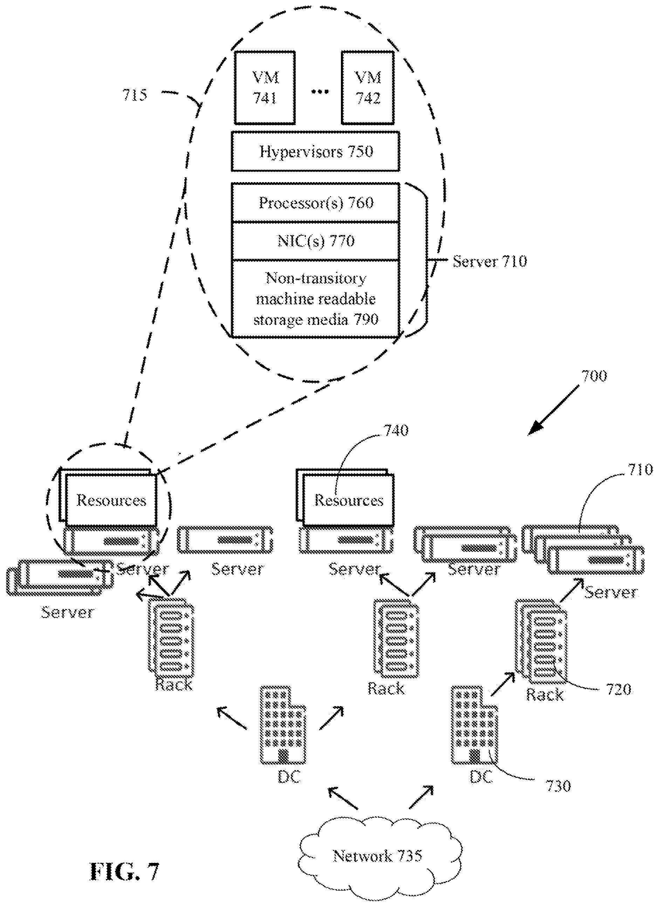

Figure 7 is an architectural overview of a cloud computing environment 700 that comprises a hierarchy of a cloud computing entities. The cloud computing environment 700 can include a number of different data centers (DCs) 730 at different geographic sites connected over a network 735. Each data center 730 site comprises a number of racks 720, each rack 720 comprises a number of servers 710. It is understood that in alternative embodiments a cloud computing environment may include any number of data centers, racks and servers. A set of the servers 710 may be selected to host resources 740. In one embodiment, the servers 710 provide an execution environment for hosting entities and their hosted entities, where the hosting entities may be service providers and the hosted entities may be the services provided by the service providers. Examples of hosting entities include virtual machines (which may host containers) and containers (which may host contained components), among others. A container is a software component that can contain other components within itself. Multiple containers can share the same operating system (OS) instance, and each container provides an isolated execution environment for its contained component. As opposed to VMs, containers and their contained components share the same host OS instance and therefore create less overhead. Each of the servers 710, the VMs, and the containers within the VMs may be configured to perform the various embodiments as have been described herein.

Further details of the server 710 and its resources 740 are shown within a dotted circle 715 of Figure 7, according to one embodiment. The cloud computing environment 700 comprises a general-purpose network device (e.g. server 710), which includes hardware comprising a set of one or more processor(s) 760, which can be commercial off-the-shelf (COTS) processors, dedicated Application Specific Integrated Circuits (ASICs), or any other type of processing circuit including digital or analog hardware components or special purpose processors, and network interface controller(s) 770 (NICs), also known as network interface cards, as well as non-transitory machine-readable storage media 790 having stored therein software and/or instructions executable by the processor(s) 760.

During operation, the processor(s) 760 execute the software to instantiate a hypervisor 750 and one or more VMs 741, 742 that are run by the hypervisor 750. The hypervisor 750 and VMs 741, 742 are virtual resources, which may run node instances in this embodiment. In one embodiment, the node instance may be implemented on one or more of the VMs 741, 742 that run on the hypervisor 750 to perform the various embodiments as have been described herein. In one embodiment, the node instance may be instantiated as a network node performing the various embodiments as described herein.

In an embodiment, the node instance instantiation can be initiated by a user 701 or by a machine in different manners. For example, the user 701 can input a command, e.g., by clicking a button, through a user interface to initiate the instantiation of the node instance. The user 701 can alternatively type a command on a command line or on another similar interface. The user 701 can otherwise provide instructions through a user interface or by email, messaging or phone to a network or cloud administrator, to initiate the instantiation of the node instance.

Embodiments may be represented as a software product stored in a machine-readable medium (such as the non-transitory machine-readable storage media 790, also referred to as a computer-readable medium, a processor-readable medium, or a computer usable medium having a computer readable program code embodied therein). The non-transitory machine-readable medium 790 may be any suitable tangible medium including a magnetic, optical, or electrical storage medium including a diskette, compact disk read only memory (CD-ROM), digital versatile disc read-only memory (DVD-ROM) memory device (volatile or non-volatile) such as hard drive or solid state drive, or similar storage mechanism. The machine-readable medium may contain various sets of instructions, code sequences, configuration information, or other data, which, when executed, cause a processor to perform steps in a method according to an embodiment. Those of ordinary skill in the art will appreciate that other instructions and operations necessary to implement the described embodiments may also be stored on the machine-readable medium. Software running from the machine-readable medium may interface with circuitry to perform the described tasks.

The above-described embodiments are intended to be examples only. Alterations, modifications and variations may be effected to the particular embodiments by those of skill in the art without departing from the scope which is defined solely by the claims appended hereto.

## Claims

1. A method for validating a configured instance of a system in a production environment using test cases selected from a test suite (210), which has validated a first configured instance of the system in a development environment, the method comprising:
forming (410) a reduced set of requirements in response to a change in environments by removing one or more requirements from a set of requirements against which the first configured instance is validated, wherein the removed one or more requirements include at least one or more environment agnostic requirements which are independent of the environments, and wherein the removing is based on at least a classification of configuration parameters (220) of the system with respect to dependency of the environments and is further based on a first relation between the set of requirements and the configuration parameters;
forming (420) a reduced test suite (215) by selecting, from the test suite, the test cases that test the system against each requirement in the reduced set of requirements; and
applying (430) the reduced test suite to a second configured instance of the system to thereby validate that the system operates in compliance with the set of requirements in the production environment.

2. The method of claim 1, further comprising:
receiving inputs including an impact matrix (230) which captures the first relation, wherein the impact matrix having the set of requirements along a first dimension and the configuration parameters along a second dimension.

3. The method of claim 1, further comprising:
classifying the configuration parameters into environment dependent configuration parameters and environment agnostic configuration parameters, wherein the environment agnostic configuration parameters are independent of an environment in which the system is deployed.

4. The method of claim 3, wherein the first configured instance and the second configured instance have same values for environment agnostic configuration parameters.

5. The method of claim 3, further comprising:
classifying (310), based on the classified configuration parameters, the set of requirements into environment agnostic requirements, environment dependent requirements and composite requirements, wherein each composite requirement maps to at least one environment agnostic configuration parameter and at least one environment dependent configuration parameter.

6. The method of claim 1, wherein the removed one or more requirements further include at least an environment dependent requirement, which maps to a set of environment dependent configuration parameters and the set of environment dependent configuration parameters map to at least a composite requirement, wherein the composite requirement maps to at least one environment agnostic configuration parameter and at least one environment dependent configuration parameter in the set.

7. The method of claim 1, further comprising:
receiving inputs including a coverage matrix (240) relating the test cases in the test suite to the set of requirements, wherein the coverage matrix having the test cases along a first dimension and the set of requirements along a second dimension.

8. A network node (500) comprising:
processing circuitry (502); and
memory (504) containing instructions executable by the processing circuitry to validate a configured instance of a system in a production environment using test cases selected from a test suite (210), which has validated a first configured instance of the system in a development environment, the network node operative to:
form (410) a reduced set of requirements in response to a change in environments by removing one or more requirements from a set of requirements against which the first configured instance is validated, wherein the removed one or more requirements include at least one or more environment agnostic requirements which are independent of the environments, and wherein the removing is based on at least a classification of configuration parameters (220) of the system with respect to dependency of the environments and is further based on a first relation between the set of requirements and the configuration parameters;
form (420) a reduced test suite (215) by selecting, from the test suite, the test cases that test the system against each requirement in the reduced set of requirements; and
apply (430) the reduced test suite to a second configured instance of the system to thereby validate that the system operates in compliance with the set of requirements in the production environment.

9. The network node of claim 8, wherein the network node is further operative to:
receive inputs including an impact matrix (230) which captures the first relation, wherein the impact matrix having the set of requirements along a first dimension and the configuration parameters along a second dimension.

10. The network node of claim 8, wherein the network node is further operative to:
classify the configuration parameters into environment dependent configuration parameters and environment agnostic configuration parameters, wherein the environment agnostic configuration parameters are independent of an environment in which the system is deployed.

11. The network node of claim 10, wherein the first configured instance and the second configured instance have same values for environment agnostic configuration parameters.

12. The network node of claim 10, wherein the network node is further operative to:
Classify (310), based on the classified configuration parameters, the set of requirements into environment agnostic requirements, environment dependent requirements and composite requirements, wherein each composite requirement maps to at least one environment agnostic configuration parameter and at least one environment dependent configuration parameter.

13. The network node of claim 12, wherein the network node is further operative to:
retain all of the composite requirements in the reduced set of requirements.

14. The network node of claim 8, wherein the removed one or more requirements further include at least an environment dependent requirement, which maps to a set of environment dependent configuration parameters and the set of environment dependent configuration parameters map to at least a composite requirement, wherein the composite requirement maps to at least one environment agnostic configuration parameter and at least one environment dependent configuration parameter in the set.

15. The network node of claim 14, wherein the environment dependent requirement is removed when a first configuration parameter and a second configuration parameter in the set of environment dependent configuration parameters map to different composite requirements.

16. The network node of claim 8, wherein the network node is further operative to:
receive inputs including a coverage matrix (240) relating the test cases in the test suite to the set of requirements, wherein the coverage matrix having the test cases along a first dimension and the set of requirements along a second dimension.

17. The network node of claim 16, wherein the network node is further operative to:
select the test cases that cover the reduced set of requirements using information in the coverage matrix.

## Patentansprüche

1. Verfahren zur Validierung einer konfigurierten Instanz eines Systems in einer Produktionsumgebung unter Verwendung von Testfällen, die aus einer Testsuite (210) ausgewählt werden, die eine erste konfigurierte Instanz des Systems in einer Entwicklungsumgebung validiert hat, wobei das Verfahren umfasst:
Bilden (410) eines reduzierten Satzes von Anforderungen in Reaktion auf eine Änderung in Umgebungen durch Entfernen einer oder mehrerer Anforderungen aus einem Satz von Anforderungen, hinsichtlich derer die erste konfigurierte Instanz validiert wird, wobei die eine oder die mehreren entfernten Anforderungen mindestens eine oder mehrere umgebungsagnostische Anforderungen umfassen, die von den Umgebungen unabhängig sind, und wobei das Entfernen auf mindestens einer Einteilung von Konfigurationsparametern (220) des Systems bezüglich der Abhängigkeit der Umgebungen basiert und ferner auf einer ersten Beziehung zwischen dem Satz von Anforderungen und den Konfigurationsparametern basiert;
Bilden (420) einer reduzierten Testsuite (215) durch Auswählen der Testfälle, die das System hinsichtlich jeder Anforderung im reduzierten Satz von Anforderung testet, aus der Testsuite; und
Anwenden (430) der reduzierten Testsuite auf eine zweite konfigurierte Instanz des Systems, um dadurch zu validieren, dass das System in Übereinstimmung mit dem Satz von Anforderungen in der Produktionsumgebung funktioniert.

2. Verfahren nach Anspruch 1, ferner umfassend:
Empfangen von Eingaben, die eine Einflussmatrix (230) umfassen, welche die erste Beziehung erfasst, wobei die Einflussmatrix den Satz von Anforderungen entlang einer ersten Dimension und die Konfigurationsparametern entlang einer zweiten Dimension aufweist.

3. Verfahren nach Anspruch 1, ferner umfassend:
Einteilen der Konfigurationsparameter in umgebungsabhängige Konfigurationsparameter und umgebungsagnostische Konfigurationsparameter, wobei die umgebungsunabhängigen Konfigurationsparameter von einer Umgebung, in welcher das System eingesetzt wird, unabhängig sind.

4. Verfahren nach Anspruch 3, wobei die erste konfigurierte Instanz und die zweite konfigurierte Instanz gleiche Werte für umgebungsagnostische Konfigurationsparameter aufweisen.

5. Verfahren nach Anspruch 3, ferner umfassend:
Einteilen (310) des Satzes von Anforderungen basierend auf den eingeteilten Konfigurationsparametern in umgebungsagnostische Anforderungen, umgebungsabhängige Anforderungen und kombinierte Anforderungen, wobei jede kombinierte Anforderung mindestens einem umgebungsagnostischen Konfigurationsparameter und mindestens einem umgebungsabhängigen Konfigurationsparameter zugeordnet wird.

6. Verfahren nach Anspruch 1, wobei die eine oder die mehreren entfernten Anforderungen ferner mindestens eine umgebungsabhängige Anforderung umfassen, die einem Satz von umgebungsabhängigen Konfigurationsparametern zugeordnet ist, und der Satz von umgebungsabhängigen Konfigurationsparametern mindestens einer kombinierten Anforderung zugeordnet wird, wobei die kombinierte Anforderung mindestens einem umgebungsagnostischen Konfigurationsparameter und mindestens einem umgebungsabhängigen Konfigurationsparameter im Satz zugeordnet wird.

7. Verfahren nach Anspruch 1, ferner umfassend:
Empfangen von Eingaben, die eine Deckungsmatrix (240) umfassen, welche die Testfälle in der Testsuite mit dem Satz von Anforderungen in Beziehung setzt, wobei die Deckungsmatrix die Testfälle entlang einer ersten Dimension und den Satz von Anforderungen entlang einer zweiten Dimension aufweist.

8. Netzwerkknoten (500), umfassend:
Verarbeitungsschaltungsanordnung (502); und
Speicher (504), der Anweisungen enthält, die von der Verarbeitungsschaltungsanordnung ausgeführt werden können, um eine konfigurierte Instanz eines Systems in einer Produktionsumgebung unter Verwendung von Testfällen zu validieren, die aus einer Testsuite (210) ausgewählt werden, die eine erste konfigurierte Instanz des Systems in einer Entwicklungsumgebung validiert hat, wobei der Netzwerkknoten ausgelegt ist zum:
Bilden (410) eines reduzierten Satzes von Anforderungen in Reaktion auf eine Änderung in Umgebungen durch Entfernen einer oder mehrerer Anforderungen aus einem Satz von Anforderungen, hinsichtlich derer die erste konfigurierte Instanz validiert wird, wobei die eine oder die mehreren entfernten Anforderungen mindestens eine oder mehrere umgebungsagnostische Anforderungen umfassen, die von den Umgebungen unabhängig sind, und wobei das Entfernen auf mindestens einer Einteilung von Konfigurationsparametern (220) des Systems bezüglich der Abhängigkeit der Umgebungen basiert und ferner auf einer ersten Beziehung zwischen dem Satz von Anforderungen und den Konfigurationsparametern basiert;
Bilden (420) einer reduzierten Testsuite (215) durch Auswählen der Testfälle, die das System hinsichtlich jeder Anforderung im reduzierten Satz von Anforderung testen, aus der Testsuite; und
Anwenden (430) der reduzierten Testsuite auf eine zweite konfigurierte Instanz des Systems, um dadurch zu validieren, dass das System in Übereinstimmung mit dem Satz von Anforderungen in der Produktionsumgebung funktioniert.

9. Netzwerkknoten nach Anspruch 8, wobei der Netzwerkknoten ferner ausgelegt ist zum:
Empfangen von Eingaben, die eine Einflussmatrix (230) umfassen, welche die erste Beziehung erfasst, wobei die Einflussmatrix den Satz von Anforderungen entlang einer ersten Dimension und die Konfigurationsparametern entlang einer zweiten Dimension aufweist.

10. Netzwerkknoten nach Anspruch 8, wobei der Netzwerkknoten ferner ausgelegt ist zum:
Einteilen der Konfigurationsparameter in umgebungsabhängige Konfigurationsparameter und umgebungsagnostische Konfigurationsparameter, wobei die umgebungsunabhängigen Konfigurationsparameter von einer Umgebung, in welcher das System eingesetzt wird, unabhängig sind.

11. Netzwerkknoten nach Anspruch 10, wobei die erste konfigurierte Instanz und die zweite konfigurierte Instanz gleiche Werte für umgebungsagnostische Konfigurationsparameter aufweisen.

12. Netzwerkknoten nach Anspruch 10, wobei der Netzwerkknoten ferner ausgelegt ist zum:
Einteilen (310) des Satzes von Anforderungen basierend auf den eingeteilten Konfigurationsparametern in umgebungsagnostische Anforderungen, umgebungsabhängige Anforderungen und kombinierte Anforderungen, wobei jede kombinierte Anforderung mindestens einem umgebungsagnostischen Konfigurationsparameter und mindestens einem umgebungsabhängigen Konfigurationsparameter zugeordnet wird.

13. Netzwerkknoten nach Anspruch 12, wobei der Netzwerkknoten ferner ausgelegt ist zum:
Halten aller der kombinierten Anforderungen im reduzierten Satz von Anforderungen.

14. Netzwerkknoten nach Anspruch 8, wobei die eine oder die mehreren entfernten Anforderungen ferner mindestens eine umgebungsabhängige Anforderung umfassen, die einem Satz von umgebungsabhängigen Konfigurationsparametern zugeordnet ist, und der Satz von umgebungsabhängigen Konfigurationsparametern mindestens einer kombinierten Anforderung zugeordnet wird, wobei die kombinierte Anforderung mindestens einem umgebungsagnostischen Konfigurationsparameter und mindestens einem umgebungsabhängigen Konfigurationsparameter im Satz zugeordnet wird.

15. Netzknoten nach Anspruch 14, wobei die umgebungsabhängige Anforderung entfernt wird, wenn ein erster Konfigurationsparameter und ein zweiter Konfigurationsparameter im Satz von umgebungsabhängigen Konfigurationsparametern verschiedenen kombinierten Anforderungen zugeordnet werden.

16. Netzwerkknoten nach Anspruch 8, wobei der Netzwerkknoten ferner ausgelegt ist zum:
Empfangen von Eingaben, die eine Deckungsmatrix (240) umfassen, welche die Testfälle in der Testsuite mit dem Satz von Anforderungen in Beziehung setzt, wobei die Deckungsmatrix die Testfälle entlang einer ersten Dimension und den Satz von Anforderungen entlang einer zweiten Dimension aufweist.

17. Netzwerkknoten nach Anspruch 16, wobei der Netzwerkknoten ferner ausgelegt ist zum:
Auswählen der Testfälle, die den reduzierten Satz von Anforderungen abdecken, unter Verwendung von Informationen in der Deckungsmatrix.

## Revendications

1. Procédé de validation d'une instance configurée d'un système dans un environnement de production en utilisant des cas de test sélectionnés depuis une suite de tests (210), qui a validé une première instance configurée du système dans un environnement de développement, le procédé comprenant :
la formation (410) d'un ensemble réduit d'exigences en réponse à un changement dans des environnements par la suppression d'une ou plusieurs exigences d'un ensemble d'exigences par rapport auxquelles la première instance configurée est validée, dans lequel les une ou plusieurs exigences supprimées incluent au moins une ou plusieurs exigences agnostiques d'environnement qui sont indépendantes des environnements, et dans lequel la suppression est basée sur au moins une classification de paramètres de configuration (220) du système en ce qui concerne une dépendance des environnements et est en outre basée sur une première relation entre l'ensemble d'exigences et les paramètres de configuration ;
la formation (420) d'une suite de tests réduite (215) par la sélection, depuis la suite de tests, des cas de test qui testent le système par rapport à chaque exigence dans l'ensemble réduit d'exigences ; et
l'application (430) de la suite de tests réduite à une deuxième instance configurée du système pour valider de ce fait que le système fonctionne conformément à l'ensemble d'exigences dans l'environnement de production.

2. Procédé selon la revendication 1, comprenant en outre : la réception d'entrées incluant une matrice d'incidence (230) qui capture la première relation, dans lequel la matrice d'incidence comporte l'ensemble d'exigences le long d'une première dimension et les paramètres de configuration le long d'une deuxième dimension.

3. Procédé selon la revendication 1, comprenant en outre : la classification des paramètres de configuration en paramètres de configuration dépendants d'environnement et en paramètres de configuration agnostiques d'environnement, dans lequel les paramètres de configuration agnostiques d'environnement sont indépendants d'un environnement dans lequel le système est déployé.

4. Procédé selon la revendication 3, dans lequel la première instance configurée et la deuxième instance configurée ont les mêmes valeurs pour des paramètres de configuration agnostiques d'environnement.

5. Procédé selon la revendication 3, comprenant en outre : la classification (310), sur la base des paramètres de configuration classifiés, de l'ensemble d'exigences en exigences agnostiques d'environnement, en exigences dépendantes d'environnement et en exigences composites, dans lequel chaque exigence composite est mise en concordance avec au moins un paramètre de configuration agnostique d'environnement et au moins un paramètre de configuration dépendant d'environnement.

6. Procédé selon la revendication 1, dans lequel les une ou plusieurs exigences supprimées incluent en outre au moins une exigence dépendante d'environnement, qui est mise en concordance avec un ensemble de paramètres de configuration dépendants d'environnement et l'ensemble de paramètres de configuration dépendants d'environnement est mis en concordance avec au moins une exigence composite, dans lequel l'exigence composite est mise en concordance avec au moins un paramètre de configuration agnostique d'environnement et au moins un paramètre de configuration dépendant d'environnement dans l'ensemble.

7. Procédé selon la revendication 1, comprenant en outre : la réception d'entrées incluant une matrice de couverture (240) mettant les cas de test dans la suite de tests en relation avec l'ensemble d'exigences, dans lequel la matrice de couverture comporte les cas de test le long d'une première dimension et l'ensemble d'exigences le long d'une deuxième dimension.

8. Nœud de réseau (500) comprenant :
une circuiterie de traitement (502) ; et
une mémoire (504) contenant des instructions exécutables par la circuiterie de traitement pour valider une instance configurée d'un système dans un environnement de production en utilisant des cas de test sélectionnés depuis une suite de tests (210), qui a validé une première instance configurée du système dans un environnement de développement, le nœud de réseau étant opérationnel pour :
former (410) un ensemble réduit d'exigences en réponse à un changement dans des environnements par la suppression d'une ou plusieurs exigences d'un ensemble d'exigences par rapport auxquelles la première instance configurée est validée, dans lequel les une ou plusieurs exigences supprimées incluent au moins une ou plusieurs exigences agnostiques d'environnement qui sont indépendantes des environnements, et dans lequel la suppression est basée sur au moins une classification de paramètres de configuration (220) du système en ce qui concerne une dépendance des environnements et est en outre basée sur une première relation entre l'ensemble d'exigences et les paramètres de configuration ;
former (420) une suite de tests réduite (215) par la sélection, depuis la suite de tests, des cas de test qui testent le système par rapport à chaque exigence dans l'ensemble réduit d'exigences ; et
appliquer (430) la suite de tests réduite à une deuxième instance configurée du système pour valider de ce fait que le système fonctionne conformément à l'ensemble d'exigences dans l'environnement de production.

9. Nœud de réseau selon la revendication 8, dans lequel le nœud de réseau est en outre opérationnel pour : recevoir des entrées incluant une matrice d'incidence (230) qui capture la première relation, dans lequel la matrice d'incidence comporte l'ensemble d'exigences le long d'une première dimension et les paramètres de configuration le long d'une deuxième dimension.

10. Nœud de réseau selon la revendication 8, dans lequel le nœud de réseau est en outre opérationnel pour : classifier les paramètres de configuration en paramètres de configuration dépendants d'environnement et en paramètres de configuration agnostiques d'environnement, dans lequel les paramètres de configuration agnostiques d'environnement sont indépendants d'un environnement dans lequel le système est déployé.

11. Nœud de réseau selon la revendication 10, dans lequel la première instance configurée et la deuxième instance configurée ont les mêmes valeurs pour des paramètres de configuration agnostiques d'environnement.

12. Nœud de réseau selon la revendication 10, dans lequel le nœud de réseau est en outre opérationnel pour : classifier (310), sur la base des paramètres de configuration classifiés, l'ensemble d'exigences en exigences agnostiques d'environnement, en exigences dépendantes d'environnement et en exigences composites, dans lequel chaque exigence composite est mise en concordance avec au moins un paramètre de configuration agnostique d'environnement et au moins un paramètre de configuration dépendant d'environnement.

13. Nœud de réseau selon la revendication 12, dans lequel le nœud de réseau est en outre opérationnel pour : maintenir toutes les exigences composites dans l'ensemble réduit d'exigences.

14. Nœud de réseau selon la revendication 8, dans lequel les une ou plusieurs exigences supprimées incluent en outre au moins une exigence dépendante d'environnement, qui est mise en concordance avec un ensemble de paramètres de configuration dépendants d'environnement et l'ensemble de paramètres de configuration dépendants d'environnement est mis en concordance avec au moins une exigence composite, dans lequel l'exigence composite est mise en concordance avec au moins un paramètre de configuration agnostique d'environnement et au moins un paramètre de configuration dépendant d'environnement dans l'ensemble.

15. Nœud de réseau selon la revendication 14, dans lequel l'exigence dépendante d'environnement est supprimée lorsqu'un premier paramètre de configuration et un deuxième paramètre de configuration dans l'ensemble de paramètres de configuration dépendants d'environnement sont mis en concordance avec différentes exigences composites.

16. Nœud de réseau selon la revendication 8, dans lequel le nœud de réseau est en outre opérationnel pour : recevoir des entrées incluant une matrice de couverture (240) mettant les cas de test dans la suite de tests en relation avec l'ensemble d'exigences, dans lequel la matrice de couverture comporte les cas de test le long d'une première dimension et l'ensemble d'exigences le long d'une deuxième dimension.

17. Nœud de réseau selon la revendication 16, dans lequel le nœud de réseau est en outre opérationnel pour : sélectionner les cas de test qui couvrent l'ensemble réduit d'exigences en utilisant des informations dans la matrice de couverture.
